(19) Europäisches Patentamt
European Patent Office
Office européen des brevets

(11) **EP 4 746 403 A1**

(12) **EUROPEAN PATENT APPLICATION**
published in accordance with Art. 153(4) EPC

(43) Date of publication:
**20.05.2026 Bulletin 2026/21**

(21) Application number: **24891638.9**

(22) Date of filing: **25.09.2024**

(51) International Patent Classification (IPC):
**H04N 9/31** *(2006.01)* **H04N 21/4363** *(2011.01)*
**H04N 21/41** *(2011.01)*

(52) Cooperative Patent Classification (CPC):
**H04N 9/31; H04N 21/41; H04N 21/4363**

(86) International application number:
**PCT/KR2024/014479**

(87) International publication number:
**WO 2025/105691 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.11.2023 KR 20230159344**

(71) Applicant: **Samsung Electronics Co., Ltd.**
**Suwon-si, Gyeonggi-do 16677 (KR)**

(72) Inventors:
• KIM, Jiman
  Suwon-si, Gyeonggi-do 16677 (KR)
• SEO, Sungwon
  Suwon-si, Gyeonggi-do 16677 (KR)
• KANG, Dukjin
  Suwon-si, Gyeonggi-do 16677 (KR)
• CHOI, Dongjin
  Suwon-si, Gyeonggi-do 16677 (KR)

(74) Representative: **Gulde & Partner**
**Patent- und Rechtsanwaltskanzlei mbB**
**Berliner Freiheit 2**
**10785 Berlin (DE)**

(54) **ELECTRONIC DEVICE AND OPERATING METHOD OF ELECTRONIC DEVICE**

(57) An image projection device is disclosed. An image projection device according to an embodiment of the disclosure may comprise: memory storing information about a reference image, an image projection unit comprising a projector configured to project an image or a video, a communication unit comprising communication circuitry, at least one processor, comprising processing circuitry, connected to the memory, the image projection unit, and the communication unit. In an embodiment, at least one processor, individually and/or collectively, may be configured to control the image projection device to: project a first corrected image generated based on first keystone correction information and the reference image, onto a screen, receive, from a user device, a captured image obtained by capturing the first corrected image projected onto the screen, generate second keystone correction information based on information about positions of at least four first markers included in the reference image, information about positions of at least four second markers included in the captured image, and the first keystone correction information, and project a second corrected image generated based on the second keystone correction information and the reference image. The at least four second marker may be disposed at positions corresponding to the positions of the at least four first markers.

**EP 4 746 403 A1**

# FIG.13

## Description

**[Technical Field]**

The disclosure relates to an electronic device and a method for operating the electronic device.

**[Background Art]**

With the development of information communication technology and optical technology, it is possible to display an image or a video on a surface such as a wall or a screen using not only a display device such as a TV or a monitor, but also an image projection device that projects a beam. A beam projector may generate an image using a light source (e.g., LED, laser, etc.). A lens system may be used to adjust the size and focus of the image generated by the light source. When an image is projected onto a screen through the image projection device, the angle between the lens of the image projection device and the screen is different, and thus the projected image may be distorted. A keystone correction technique may be used to correct such distortion.

**[Disclosure]**

**(Technical Problem)**

Keystone correction may be performed to correct distortion caused by the difference of the angle between the direction of the beam of the image projection device and the screen plane, but it is necessary to correct the difference between the direction of the beam of the image projection device and the direction in which the user faces.

**(Technical Solution)**

Embodiments of the disclosure provide a device and method for correcting an image projected onto a screen through an image projection device to correspond to the direction in which the user faces at the user's position.

An image projection device according to an example embodiment of the disclosure may comprise: memory storing information about a reference image, an image projection unit comprising a projector configured to project an image or a video, a communication unit comprising communication circuitry, at least one processor, comprising processing circuitry, connected to the memory, the image projection unit, and the communication unit. In an example embodiment, at least one processor, individually and/or collectively, may be configured to control the image projection device to: project a first corrected image generated based on first keystone correction information and the reference image, onto a screen, receive, from a user device, a captured image obtained by capturing the first corrected image projected onto the screen, generate second keystone correction information based on information about positions of at least four first markers included in the reference image, information about positions of at least four second markers included in the captured image, and the first keystone correction information, and project a second corrected image generated based on the second keystone correction information and the reference image. The at least four second marker may be disposed at positions corresponding to the positions of the at least four first markers.

In an example embodiment, the information about the positions of the at least four first markers may include coordinate values of the at least four first markers, and the information about the positions of the at least four second markers may include coordinate values of the at least four second markers.

In an example embodiment, at least one processor, individually and/or collectively, may be configured to establish a communication link with the user device through the communication unit, and receive the captured image from the user device through the communication unit.

In an example embodiment, at least one processor, individually and/or collectively, may be configured to transmit the first keystone correction information to the user device through the communication link, and receive the second keystone correction information through the communication link.

In an example embodiment, at least one processor, individually and/or collectively, may be configured to: identify an input for projecting the first corrected image through a user interface for keystone correction, and control the image projection device to project the first corrected image in response to identifying the input.

In an example embodiment, the image projection device may further comprise at least one sensor connected to at least one processor. At least one processor may be configured to control the image projection device to: project the reference image onto the screen, obtain the first keystone correction information from the reference image projected onto the screen using the at least one sensor. The at least one sensor may include at least one of a distance sensor or a rotation sensor.

In an example embodiment, the first keystone correction information may include information about a projection area of the reference image projected onto the screen.

In an example embodiment, the second keystone information may include information about a homography matrix of the image projection device and the user device.

An electronic device according to an example embodiment of the disclosure may comprise: memory storing information about a reference image, a camera, a communication unit comprising communication circuitry, and at least one processor, comprising processing circuitry, connected to the camera. In an example embodiment, at least one processor, individually and/or collectively, may be configured to : obtain a captured image by capturing a first corrected image projected onto a screen by an image projection device using the camera, receive first keystone correction information from the image projection device through the communication unit, generate second keystone correction information based on information about positions of at least four first markers included in the reference image, information about positions of at least four second markers included in the captured image, and the first keystone correction information, and transmit the second keystone information to the image projection device. The first corrected image may include an image obtained by correcting the reference image based on the first keystone correction information. The at least four second marker may be disposed at positions corresponding to the positions of the at least four first markers.

In an example embodiment, the information about the positions of the at least four first markers may include coordinate values of the at least four first markers, and the information about the positions of the at least four second markers may include coordinate values of the at least four second markers.

In an example embodiment, at least one processor, individually and/or collectively, may be configured to establish a communication link with the image projection device through the communication unit, and receive the first keystone correction information through the communication link, and transmit the second keystone correction information through the communication link.

In an example embodiment, at least one processor, individually and/or collectively, may be configured to identify an input for capturing the first corrected image through a user interface for keystone correction, and obtain the captured image by capturing the first corrected image in response to identifying the input.

In an example embodiment, at least one processor, individually and/or collectively, may be configured to transmit the captured image to the image projection device through the communication unit in response to obtaining the captured image.

In an example embodiment, the first keystone correction information may include information about a projection area of the reference image projected onto the screen.

In an example embodiment, the second keystone information may include information about a homography matrix of the image projection device and the user device.

A method for operating an image projection device, according to an example embodiment of the disclosure, may comprise: projecting a first corrected image generated based on first keystone correction information and a reference image, onto a screen, receiving, from a user device, a captured image obtained by capturing the first corrected image projected onto the screen, generating second keystone correction information based on information about positions of at least four first markers included in the reference image, information about positions of at least four second markers included in the captured image, and the first keystone correction information, and projecting a second corrected image generated based on the second keystone correction information and the reference image. The at least four second marker may be disposed at positions corresponding to the positions of the at least four first markers.

In an example embodiment, the information about the positions of the at least four first markers may include coordinate values of the at least four first markers, and the information about the positions of the at least four second markers may include coordinate values of the at least four second markers.

In an example embodiment, the method for operating the image projection device may further comprise establishing a communication link with the user device, and receiving the captured image from the user device.

In an example embodiment, the method for operating the image projection device may further comprise transmitting the first keystone correction information to the user device through the communication link, and receiving the second keystone correction information through the communication link.

Example embodiments of the disclosure may provide an effect of performing keystone correction using an image projection device and a camera of a user device.

Example embodiments of the disclosure may also provide an effect of increasing the recognition rate of a pattern projected for keystone correction.

Effects of the disclosure are not limited to the foregoing, and other unmentioned effects will be apparent to one of ordinary skill in the art from the following description.

[Description of Drawings]

The above and other aspects, features, and advantages of certain embodiments of the present disclosure will be more apparent from the following detailed description, taken in conjunction with the accompanying drawings, in which:

FIG. 1 is a block diagram illustrating an example electronic device in a network environment according to various embodiments;
FIG. 2 is a block diagram illustrating an example configuration of an image projection device according to an embodiment;
FIG. 3 is a diagram illustrating an example of a marker (or tag) according to an embodiment;
FIG. 4 is a diagram illustrating an example of an image including a marker according to an embodiment;

FIG. 5 is a diagram illustrating an example of keystone correction according to an embodiment;

FIG. 6A is a diagram illustrating an example of a reference image according to an embodiment.;

FIG. 6B is a diagram illustrating an example of a captured image according to an embodiment;

FIG. 7A is a diagram illustrating an example of a reference image projected by an image projection device according to an embodiment;

FIG. 7B is a diagram illustrating an example of reference images projected using two image projection devices according to an embodiment;

FIG. 8 is a flowchart illustrating an example operation of an image projection device according to an embodiment;

FIG. 9A is a diagram illustrating an example of projecting a first corrected image according to an embodiment.;

FIG. 9B is a diagram illustrating an example of projecting a first corrected image according to an embodiment;

FIG. 10 is a flowchart illustrating an example operation of an electronic device according to an embodiment;

FIG. 11 is a signal flow diagram illustrating an example operation of an electronic device and an image projection device, according to an embodiment;

FIG. 12 is a signal flow diagram illustrating an example operation of an electronic device and an image projection device, according to an embodiment; and

FIG. 13 is a diagram illustrating an example of a second keystone correction flow according to an embodiment.

**[Mode for Invention]**

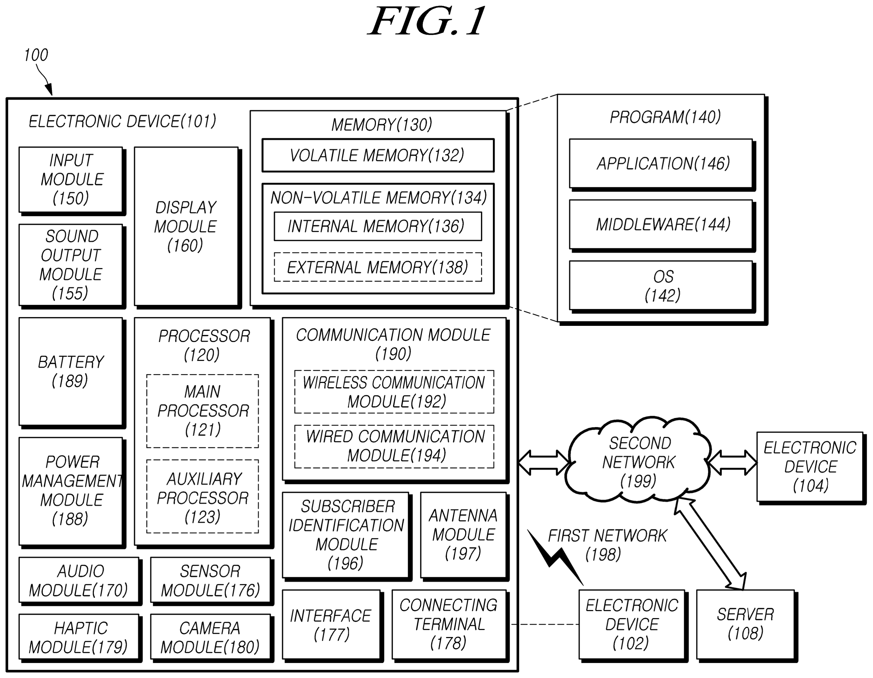

FIG. 1 is a block diagram illustrating an example electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth™, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197. According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

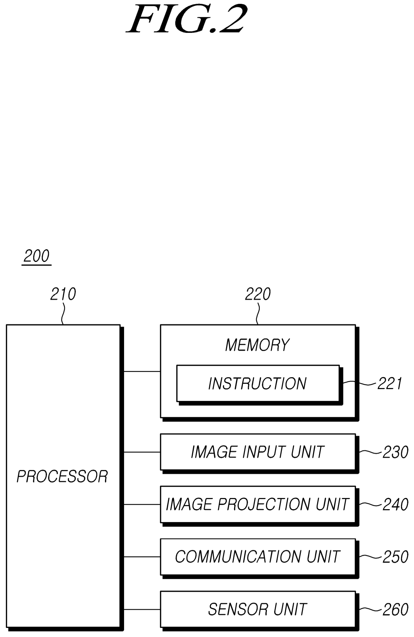

FIG. 2 is a block diagram illustrating an example configuration of an image projection device according to an embodiment. An image projection device 200 may refer, for example, to a device for displaying an image or a video on a flat surface such as a wall or a screen, and may include a projector device. The image projection device 200 may include various types of projectors such as a liquid crystal display (LCD) projector, a cathode-ray tube (CRT) projector, a digital light processing (DLP) projector, a liquid crystal on silicon (LCOS) projector, an overhead projector, and a handheld projector.

According to an embodiment, memory 220 is a storage medium used by the image projection device 200, and may store data such as at least one instruction 221 or configuration information corresponding to at least one program. The program may include an operating system (OS) program and various application programs.

In an embodiment, memory 220 may include at least one type of storage medium of flash memory types, hard disk types, multimedia card micro types, card types of memories (e.g., SD or XD memory cards), random access memories (RAMs), static random access memories (SRAMs), read-only memories (ROMs), electrically erasable programmable read-only memories (EEPROMs), programmable read-only memories (PROMs), magnetic memories, magnetic disks, or optical discs.

According to an embodiment, the image input unit 230 may include various input circuitry and receive images and image information through a tuner, an input/output unit, or the communication unit 250.

In an embodiment, an image input unit 230 may include at least one of the tuner and the input/output unit.

In an embodiment, the tuner may tune and select only a frequency of a broadcast channel to be received by the image projection device 200 from among many radio wave components through amplification, mixing, and resonance of the broadcast signal wiredly or wirelessly received.

In an embodiment, the broadcast signal may include video, audio, and additional data (e.g., an electronic program guide (EPG)).

In an embodiment, the tuner may receive a real-time broadcasting channel (or a real-time viewing image) from various broadcasting sources such as terrestrial broadcasting, cable broadcasting, satellite broadcasting, Internet broadcasting, and the like.

In an embodiment, the tuner may be integrated with the image projection device 200 or may be implemented as a separate tuner electrically connected to the image projection device 200.

In an embodiment, the input/output unit may include at least one of a high definition multimedia interface (HDMI) input port, a component input jack, a PC input port, or a USB input jack capable of receiving image and video information from an external device of the image projection device 200 under the control of the processor 210.

It will be apparent to those skilled in the art that an input/output unit may be added, deleted, and/or changed according to the performance and structure of the image projection device 200.

In an embodiment, the image projection unit 240 may include a projector and perform a function of projecting light for expressing an image to the outside and outputting the image to a projection surface (e.g., a wall or a screen).

In an embodiment, the projection surface may be a part of a physical space in which an image or a video is output, or may include a separate projection surface.

In an embodiment, the image projection unit 240 may include various sub components such as at least one light source among a lamp, a light emitting diode (LED), and a laser, a projection lens, and a reflector.

In an embodiment, the image projection unit 240 may project an image in one of various projection schemes (e.g., CRT, LCD, DLP, laser).

In an embodiment, the image projection unit 240 may include at least one light source.

In an embodiment, the image projection unit 240 may output an image in a 4:3 aspect ratio, a 5:4 aspect ratio, and a 16:8 aspect ratio according to the purpose of the image projection device 200 or the user's settings.

In an embodiment, the image projection unit 240 may output an image or video in various resolutions, such as wide video graphics array (WVGA) (854*480), super video graphics array (SVGA) (800*600), extended graphics array (XGA) (1024*768), wide extended graphics array (WXGA) (1280*800), high definition (HD) (1280*720), super extended graphics array (SXGA) (1280*1024), UXGA (ultra extended graphics array) (1600*1200), or full-HD (1920*1080), according to the aspect ratio.

In an embodiment, the image projection unit 240 may perform various functions for adjusting the projection image or the projection video under the control of the processor 210. For example, the functions for adjusting the projection image or the projection video may include a zoom function, a lens shift function, a keystone correction function, and the like.

In an embodiment, the image projection unit 240 may output information in the form of numbers, characters, images, and/or graphics.

In an embodiment, the image projection unit 240 may display a screen corresponding to the data received from the processor 210. The image projection unit 240 may be referred to as an 'output unit', a 'display unit', or by other terms having a technical meaning equivalent thereto.

According to an embodiment, the communication unit 250 may include various communication circuitry and provide a wired/wireless communication interface enabling communication with an external device.

In an embodiment, the communication unit 250 may include at least one of a wired Ethernet communication unit, a wireless LAN communication unit, and a short-range wireless communication unit. For example, the WLAN communicator may include, e.g., Wi-Fi, and may support the WLAN standard IEEE802.11x of the American Institute of Electrical and Electronics Engineers (IEEE). In an embodiment, the wireless LAN communication unit may be wirelessly connected to an access point (AP) under the control of the processor 210.

In an embodiment, the AP may include a device capable of connecting devices using a related standard using Wi-Fi in a computer network.

In an embodiment, the short-range communication unit may wirelessly perform short-range communication with an external device under the control of the processor 210. For example, the short-range communication may include Bluetooth, Bluetooth low energy, infrared data association (IrDA), ultra-wideband (UWB), and near field communication (NFC). The external device may include a server device and a mobile terminal (e.g., a phone or a tablet) that provide an image service or the like.

According to an embodiment, the processor 210 may include various processing circuitry and control at least one other component of the image projection device 200 and/or execute computation or data processing regarding communication by executing at least one command 221 stored in the memory 220. The processor 210 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

In an embodiment, the processor 210 may control the image projection unit 240 to project a test image or video including a plurality of markers (patterns, tags) onto a projection surface. For example, the test image may include an image including only a plurality of markers.

In an embodiment, the marker may have a pattern shape in which a black area and a white area are configured at a predetermined ratio in each of a plurality of directions.

In an embodiment, the marker may be positioned at a predefined position (e.g., an area within a threshold distance from four vertices of the image). The marker may be positioned in the inner area by a predetermined ratio with respect to the size of the entire image with respect to the four vertices of the test image.

In an embodiment, the sensor unit 260 may include at least one sensor, for example, an acceleration sensor (or a gravity sensor). For example, gravity acceleration may be measured for each axis using the acceleration sensor (e.g., a three-axis acceleration sensor), and the measured data may be transferred to the processor 210.

In an embodiment, the sensor unit 260 may include a distance sensor, a geomagnetic sensor, or a gyro sensor. The image projection device 200 may detect (e.g., ToF) the distance between the image projection device and the projection surface through the distance sensor. The distance sensor may include various types of distance sensors such as an ultrasonic sensor, an infrared sensor, a LIDAR sensor, a RADAR sensor, and a photodiode sensor.

In an embodiment, the processor 210 may obtain distortion information (or vertical distortion information) in a vertical direction corresponding to the projection image, based on the slope information about the electronic device measured by the sensor unit 260 and the distance information to the projection surface. The slope information may generate information about the degree to which the image projection device 200 is tilted in the vertical direction with respect to the bottom surface of the image projection device 200.

In an embodiment, the processor 210 may obtain a coordinate value of a distortion prediction image (the projection image) based on the slope information and the distance information and compare the obtained coordinate value with the coordinate value of a basic projection image, obtaining the distortion information. The basic projection image (reference image) may refer, for example, to a projection image without keystone distortion, and may be obtained based on optical information about the image projection device 200 and stored in advance. The optical information may include at least one of magnification information, focal length information, angle of view information, and resolution information about the lens of the image projection unit 240. The focal length information may include information about the distance between the center point of the lens and the focal point (subject). The angle of view information may include information about an angle at which the image projection device 200 or the like may contain an image through the lens. The resolution information may include information about the number of horizontal and vertical pixels expressed by the screen.

In an embodiment, the processor 210 may obtain distortion information in the vertical direction by comparing the coordinate value corresponding to each vertex (or corner point) of the distortion prediction image with the coordinate value corresponding to each vertex of the basic projection image. For example, the processor 210 may calculate the coordinate value corresponding to each vertex of the distortion prediction image distorted in the vertical direction with respect to the coordinate value corresponding to each vertex of the basic projection image based on the slope information and the distance information. The processor 210 may obtain vertical distortion information based on the difference between the coordinate value corresponding to each vertex of the distortion prediction image and the coordinate value corresponding to each vertex of the basic projection image.

In an embodiment, the processor 210 may obtain keystone correction information in the vertical direction based on the distortion information in the vertical direction obtained by the above-described method. Here, the keystone correction information may be information about the pixel movement value in at least one of the vertical direction (upper/lower direction) or the horizontal direction (left/right direction) of each vertex. However, the disclosure is not limited thereto, and it may have a form of a homography matrix for correcting each vertex coordinate.

In an embodiment, the memory 220 may store the keystone correction information.

In an embodiment, the processor 210 may include at least one of a central processing unit (CPU), a graphic processing unit (GPU), a micro controller unit (MCU), a sensor hub, a supplementary processor, a communication processor, an application processor, an application specific integrated circuit (ASIC), or field programmable gate arrays (FPGA) and may have multiple cores.

In an embodiment, the processor 210 may execute, e.g., software to control at least one other component (e.g., a hardware or software component) of the image projection device 200 connected with the processor 210 and may process or compute various data. According to an embodiment, as at least part of the data processing or computation, the processor 210 may store a command or data received from another component onto a volatile memory, process the command or the data stored in the volatile memory, and store resulting data in a non-volatile memory. According to an embodiment, the processor 210 may include a main processor (e.g., a central processing unit (CPU) or an application processor (AP)), or an auxiliary processor (e.g., a graphics processing unit (GPU), a neural processing unit (NPU), an image signal processor (ISP), a sensor hub processor, or a communication processor (CP)) that is operable independently from, or in conjunction with, the main processor 121. For example, when the image projection device 200 includes the main processor and the auxiliary processor, the auxiliary processor may be configured to use lower power than the main processor or to be specified for a designated function. The auxiliary processor may be implemented separately from or as part of the main processor.

In an embodiment, the processor 210 may obtain image frame data from at least one of the memory 220, the image input unit 230, or the communication unit 250. The processor 210 may receive image frame data from at least one of the memory 220, the image input unit 230, or the communication unit 250. The image frame data may include data regarding a frame of an image. For example, the image frame data may be identified from the memory 220 (e.g., an image recorded and stored). For example, the image frame data may include data obtained from the communication unit 250 or the image input unit 230 (e.g., real-time streaming image).

Correction according to an embodiment may include an operation in which an electronic device or an image projection device enhances, modifies, or enhances image quality, characteristics, etc. of an image.

For example, the electronic device or the image projection device may perform correction to enhance the texture, edge, etc. of the image to enhance the characteristics of the image. For example, the electronic device or the image projection device may perform correction to upscale the image to enhance image quality, resolution, and the like.

The electronic device or the image projection device may perform various corrections in addition to the operation of correcting the image. For example, when the electronic device or the image projection device is implemented as a modular display device including a plurality of modules, the modular display device may obtain the correction coefficient for correcting luminance, color, etc. of each of the plurality of modules to resolve non-uniformity between the plurality of modules and to make the image output by the modular display device uniform.

According to an embodiment, the modular display device may output a uniform image by correcting luminance, color, contrast, etc. of each of the plurality of modules based on correction coefficients respectively corresponding to the plurality of modules. For example, the electronic device or the image projection device may correct the position, the direction, etc. in which the image is output.

In an embodiment, when the electronic device or the image projection device is implemented as a projector, the projector may correct the position, the direction, etc. in which the image is output by performing lens shift, color matching, edge blending, keystone correction, leveling correction (horizontal correction), focus correction, etc.

The capturing according to an embodiment may include an operation of the electronic device or the image projection device that obtains an image by converting the optical image formed through the lens into an electrical signal by controlling the camera (e.g., a camera including an image sensor and a lens) provided in the electronic device or the image projection device.

As an example, one or more processors may obtain an image (e.g., a captured image) including one or more frames by photographing the surroundings of the electronic device or the image projection device by controlling the camera provided in the electronic device or the image projection device. Here, the image may include a live-view image.

In the following description, the "screen" may include an image displayed on the display of the electronic device. "Image" may be referred to as a frame. Various types of objects, such as icons, text, photos, videos, widgets, etc. may be displayed on the screen.

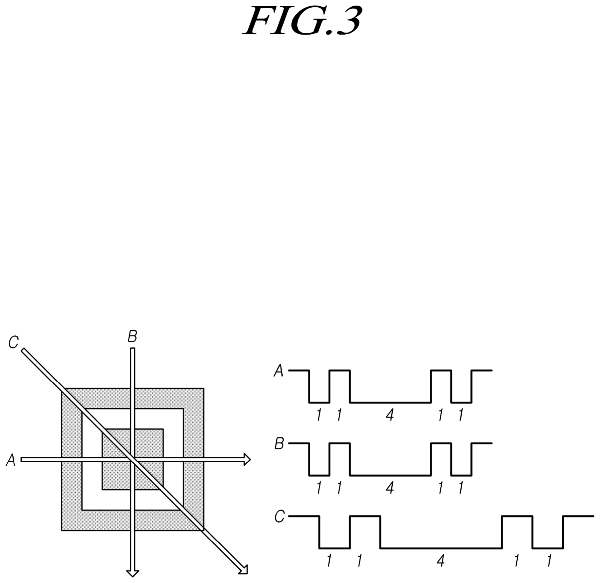

FIG. 3 is a diagram illustrating an example of a marker (or tag) according to an embodiment. The marker of FIG. 3 may be referred to by various terms such as a tag, a pattern, and the like.

In an embodiment, the marker may have a form in which a black area and a white area are alternately displayed in a plurality of directions (left/right, up/down, diagonal). The marker may include the black area and the white area in a preset ratio. For example, referring to FIG. 3, in any direction A, B, or C, the ratio of the white pixel to the black pixel may be 1:1:4:1:1. In this case, the marker may be identified in all directions of 360°. The ratio described in FIG. 3 is only an example, and various ratios may be applied. For example, a ratio may be predetermined in the image projection device 200 projecting the test image including the marker and the device (e.g., the electronic device 100) identifying the position of the marker in the captured image, and applied to the marker.

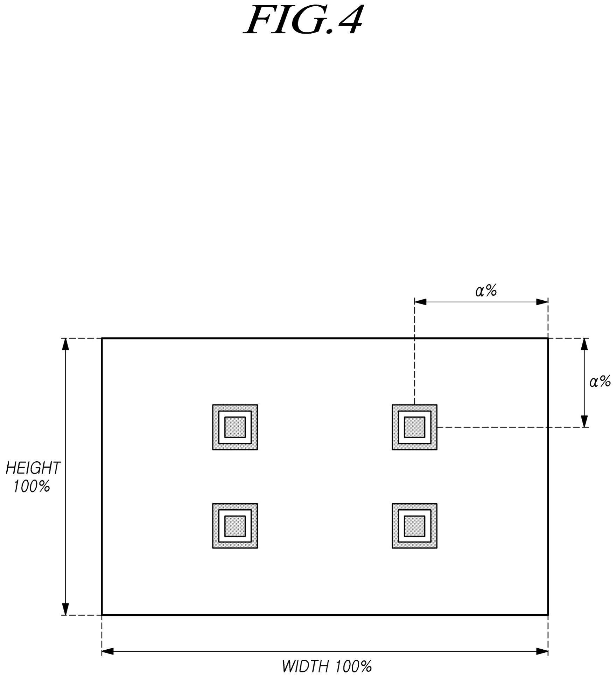

FIG. 4 is a diagram illustrating an example of an image including a marker according to an embodiment.

In an embodiment, the marker may be disposed at a predetermined position of the test image. For example, as illustrated in FIG. 4, a plurality of markers may be positioned in an α% inner area in the vertical and horizontal directions from four vertices of the image. The information about the position where the marker is disposed may be previously stored in the image projection device 200 for projecting the test image and the electronic device 100 for capturing the projected test image, or may be transmitted and received therebetween.

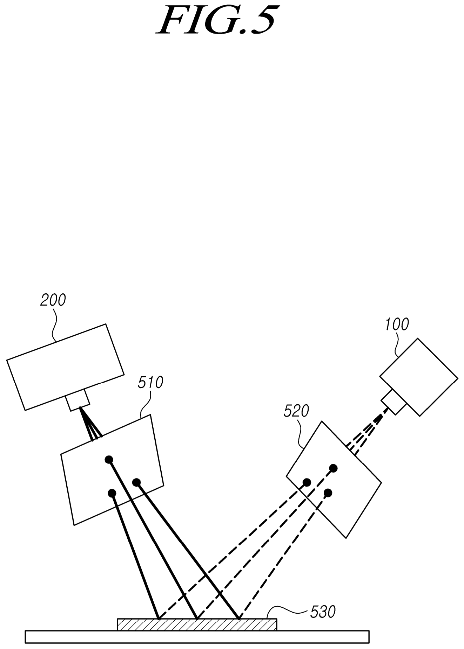

FIG. 5 is a diagram illustrating an example of keystone correction according to an embodiment.

Referring to FIG. 5, a first plane 510 which may refer to a plane in a direction in which the image projection device 200 faces the screen 530 and a second plane 520 which may refer to a plane in a direction in which the electronic device 100 faces the screen 530 may have a difference in angle due to a difference in position between the image projection device 200 and the electronic device 100. Accordingly, the screen projected by the image projection device 200 on the screen 530 may be viewed, as distorted, to the user carrying the electronic device 100.

In an embodiment, the image projection device 200 may perform keystone correction on the image projected by the image projection device 200 with respect to the position of the electronic device 100. To that end, information for conversion between the first plane 510 and the second plane 520, e.g., keystone correction information, may be required. The keystone correction information may include a homography matrix of the first plane 510 and the second plane 520.

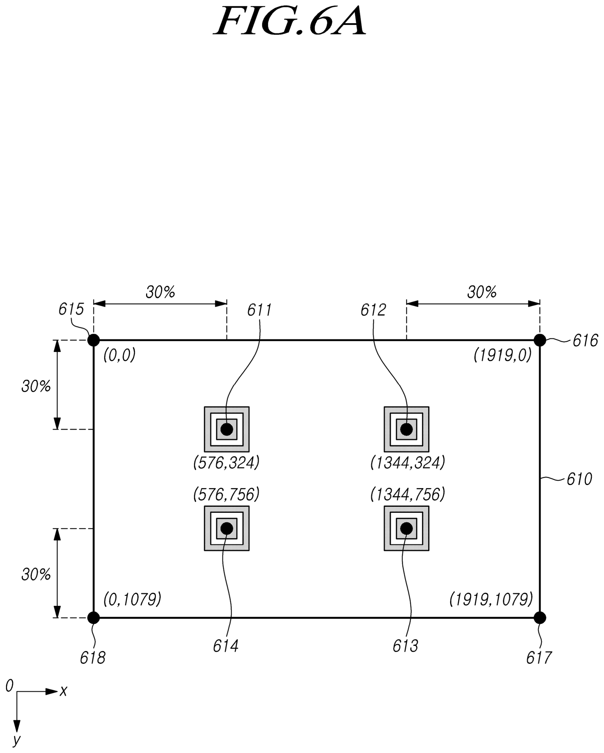

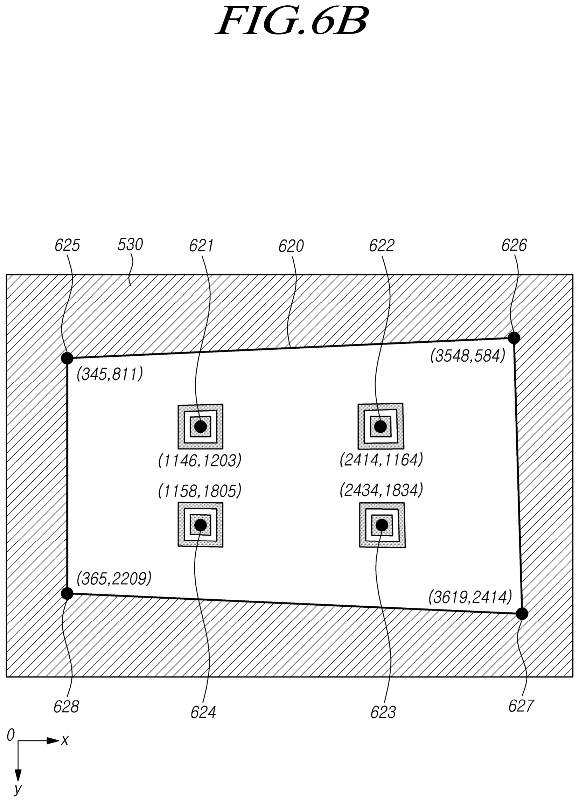

In an embodiment, the image projection device 200 or the electronic device 100 may identify the homography matrix based on at least four coordinate values (hereinafter, at least four first markers) of the first plane 510 and at least four coordinate values (hereinafter, at least four second markers) of the second plane 520. The at least four second markers may be disposed at positions respectively corresponding to the positions of the at least four first markers. For example, the image projection device 200 or the electronic device 100 may obtain a homography matrix based on coordinate values of at least four first markers and coordinate values of at least four second markers included in the reference image. Hereinafter, operations of the image projection device 200 and the electronic device 100 for obtaining coordinate values are described in greater detail with reference to FIGS. 6A and 6B.

FIG. 6A is a diagram illustrating an example of a reference image according to an embodiment. FIG. 6B is a diagram illustrating an example of a captured image according to an embodiment. In the following description, the reference image is a 1920*1080 image as an example, but this is merely an example, and the embodiments of the disclosure may be equally applied to the reference image having a different size.

In an embodiment, the reference image may include an image to be projected onto a screen for keystone correction. The reference image may include at least four first markers. For example, the reference image 610 may include four first markers 611, 612, 613, and 614.

In an embodiment, the at least four first markers may be disposed in a predetermined ratio inner area of the four vertices (corner points) of the reference image. For example, the four first markers 611, 612, 613, and 614 may be disposed in a 30% inner area of the four vertices 615, 616, 617, and 618 of the reference image 610. Accordingly, the coordinate value of the first marker 611 may be (576, 324), which is 30% inside in the x-axis direction and the y-axis direction, respectively, from the coordinate value (0, 0) of the vertex 615. The coordinate value of the first marker 612 may be (1344, 324) which is 30% inside in the x-axis direction and the y-axis direction, respectively, from the coordinate value (1919, 0) of the vertex 616. The coordinate value of the first marker 613 may be (1344, 756) which is 30% inside in the x-axis direction and the y-axis direction, respectively, from the coordinate values (1919, 1079) of the vertex 617. The coordinate values of the first marker 614 may be (576, 756) which is 30% inside in the x-axis direction and the y-axis direction, respectively, from the coordinate value (0,1079) of the vertex 618.

In an embodiment, the captured image 620 may include a projection image actually identified by the user when the image projection device 200 projects the reference image 610 onto the screen. In other words, the captured image 620 may include an image obtained by projecting the reference image 610 onto the screen by the image projection device 200 and capturing the projected image by the electronic device 100.

In an embodiment, the captured image 620 may include four second markers 621, 622, 623, and 624. The four second markers 621, 622, 623, and 624 may be situated at positions corresponding to the positions of the four first markers 611, 612, 613, and 614 of the reference image 610.

In an embodiment, the electronic device 100 may identify the coordinate values of the four vertices 625, 626, 627, and 628 of the captured image 620, based on the coordinate values of the four second markers 621, 622, 623, and 624 and the position information (e.g., disposed in a 30% inner area from each vertex) about the four first markers 611, 612, 613, and 614 on the reference image 610. Although the projected reference image is distorted, the size of the reference image 610 and the relative positions of the first markers on the reference image 610 (e.g., disposed in a 30% inner area from each vertex) are the same, and thus the positions of the second markers of the captured image 620 may be known using the position information about the first markers.

In an embodiment, the electronic device may obtain a homography matrix (homography matrix, H) based on coordinate values of the four second markers 621, 622, 623, and 624 of the captured image and coordinate values of the four first markers 611, 612, 613, and 614 on the reference image 610. The homography matrix may include a matrix for conversion between two different planes (e.g., a plane (reference image) having a direction in which the projector faces the screen as a normal vector, and a plane (captured image) having a direction in which the user device faces the screen as a normal vector). To obtain the coordinate values of the reference image 610 and the coordinate values of the captured image 620 using the homography matrix, Equation 1 below may be used.

[Equation 1]

$$\lambda \begin{bmatrix} x' \\ y' \\ 1 \end{bmatrix} = \begin{bmatrix} h_{11} & h_{12} & h_{13} \\ h_{21} & h_{22} & h_{23} \\ h_{31} & h_{32} & h_{33} \end{bmatrix} \begin{bmatrix} x \\ y \\ 1 \end{bmatrix}$$
$$H$$

In Equation 1, x and y may indicate the coordinate value of one plane, and x' and y' may indicate the coordinate value of positions corresponding to x and y on the other plane. Further, $\lambda$ may indicate a constant, and the matrix (H) of 3*3 may correspond to the homography matrix. In the homography matrix H, h33 may have a value of 1. Accordingly, in order to find out eight constants h11, h12, h13, h21, h22, h23, h31, and h32 of the homography matrix, four pairs of first coordinates (e.g., the first marker) on one plane and second coordinates (e.g., the second marker) on the other plane corresponding to the first coordinates may be required.

When the homography matrix is identified, the coordinate value of the other plane corresponding to the coordinates on one plane may be known. Accordingly, the coordinate value of the vertex 625 of the captured image 620 may be identified as (345, 811), the coordinate value of the vertex 626 may be identified as (3548, 584), the coordinate value of the vertex 627 may be identified as (3619, 2414), and the coordinate value of the vertex 628 may be identified as (365, 2209).

As described above with reference to FIGS. 6A and 6B, the image projection device 200 or the electronic device 100 may identify the homography matrix between the reference image 610 and the captured image 620. Using the homography matrix between the reference image 610 and the captured image 620, the image projection device 200 may correct the image to be projected.

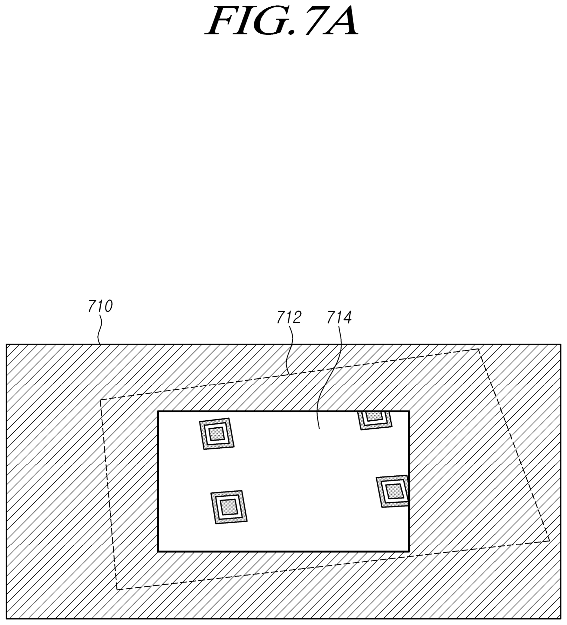

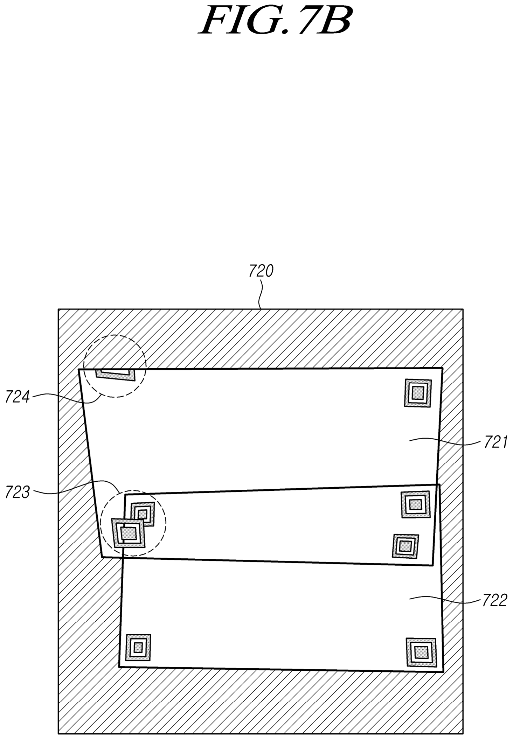

FIG. 7A is a diagram illustrating an example of a reference image projected by an image projection device according to an embodiment. FIG. 7B is a diagram illustrating an example of reference images projected using two image projection devices according to an embodiment.

As described above with reference to FIGS. 2 to 6B, in order to project a screen with respect to the user's position, the image projection device may project a reference image onto the screen, and the user device may obtain a captured image by capturing the projected reference image using a camera. In order to obtain a homography matrix for keystone correction between the image projection device and the user device, it is necessary to accurately identify four markers in the captured image. However, when the image projection device is not disposed straight with respect to the ground or is angled, at least four markers may not be correctly identified. For example, referring to FIG. 7A, it may be identified that the marker is partially cut in an image area 714, which is the area in which the reference image is actually displayed, within the entire projection area 712 of the screen 710. In this case, the four markers may not be correctly recognized. Referring to FIG. 7B, when two images 721 and 722 are projected onto one screen 720 using two or more image projection devices through edge blending, an area 723 in which markers overlap or an area 724 in which markers are partially cut may occur. Due to a cut, overlap, or distortion of the marker when two or more projectors are used as well as when one projector is used to project an image on the screen, it may be difficult for the user device to accurately identify the four markers through the captured image. Embodiments of the disclosure relate to a device and method for accurately identifying four markers in a captured image obtained by capturing a reference image by a user device including a camera, and are described below in detail with reference to the accompanying drawings.

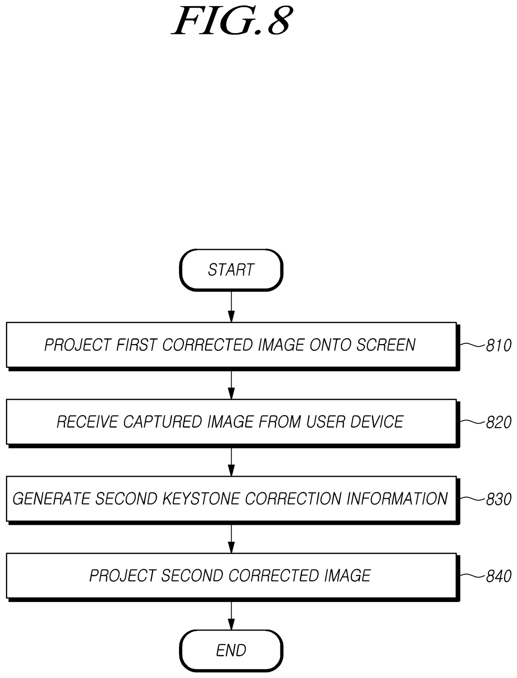

FIG. 8 is a flowchart illustrating an example operation of an image projection device according to an embodiment. The image projection device of FIG. 8 may include a device corresponding to the image projection device 200 of FIG. 2. The user device of FIG. 8 may include a device corresponding to the electronic device 100 of FIG. 1. In the description of FIG. 8, descriptions overlapping those described with reference to FIGS. 1 to 7 may not be repeated.

According to an embodiment, in operation 810, the image projection device may project a first corrected image onto a screen. The first corrected image may include an image corrected as a result of performing keystone correction (hereinafter, referred to as first keystone correction) on the reference image considering the distance between the image projection device and the screen, the angle (upper/lower, left/right) of the image projection device, and the like.

In an embodiment, the image projection device may generate the first corrected image based on the reference image and the first keystone correction information.

According to an embodiment, the image projection device may obtain first keystone correction information by performing the first keystone correction on the reference image.

In an embodiment, the first keystone correction may be performed by default in response to the power-on of the image projection device. In other words, the first keystone correction may be performed before performing the operation sequence (e.g., establishing a communication link with the user device, transmitting keystone correction information to the user device, receiving the captured image or second keystone correction information from the user device, etc.) of embodiments to be described below, and the first keystone correction information obtained as a result of the first keystone correction may be stored in the memory of the image projection device.

In an embodiment, the first keystone correction may refer to keystone correction performed by the image projection device itself using at least one sensor (e.g., the distance sensor, the acceleration sensor, or the like) included in the image projection device. For example, the image projection device may calculate the distance to the screen based on the distance sensor, identify the degree of distortion in the left/right direction or the upper/lower direction using the acceleration sensor, and correct the reference image based on the distance to the screen and the degree of distortion.

In an embodiment, the first keystone correction information may include information about the pixel movement value in at least one of the vertical (upper/lower) direction or the horizontal (left/right) direction of each vertex of the image to be projected (e.g., the reference image).

In an embodiment, the first keystone correction information may include a homography matrix of the screen plane and a plane in which the vector in the direction in which the image projection device projects an image is used as a normal vector.

According to an embodiment, the image projection device may identify coordinate values of the first corrected image based on the first keystone correction information and the reference image, and may project the first corrected image onto the screen based thereon.

In an embodiment, the image projection device may display a user interface for keystone correction. The user interface for keystone correction is a user interface displayed to perform keystone correction between the user device and the image projection device, and may identify a user input for starting a sequence for keystone correction through the user interface.

In an embodiment, the image projection device may display the user interface in response to receiving a signal for initiating keystone correction from the user device. Alternatively, the image projection device may display the user interface in response to identifying an input, for example, a physical input (e.g., a user input identified through a button or a touch pad) through the image projection device.

In an embodiment, the image projection device may establish a communication link with the user device.

A signal for initiating keystone correction may be transmitted from the user device to the image projection device through the communication link established between the image projection device and the user device.

In an embodiment, the communication link between the image projection device and the user device may include both a wireless communication link (e.g., Bluetooth) and a wired communication link (e.g., wired connection).

In an embodiment, the first corrected image may include at least four first markers. The first marker may refer, for example, to a marker included in the first corrected image.

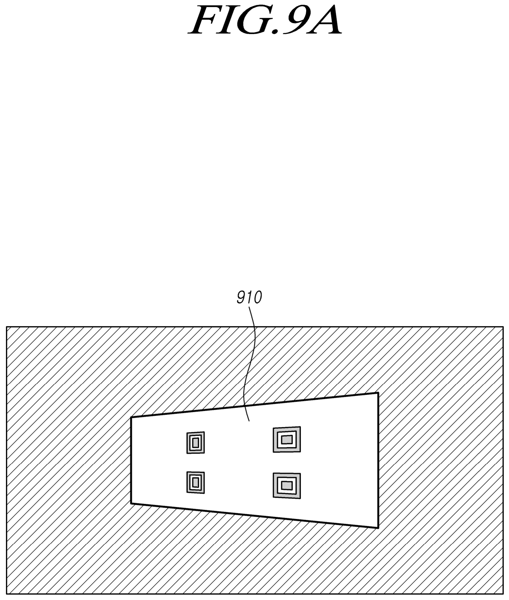

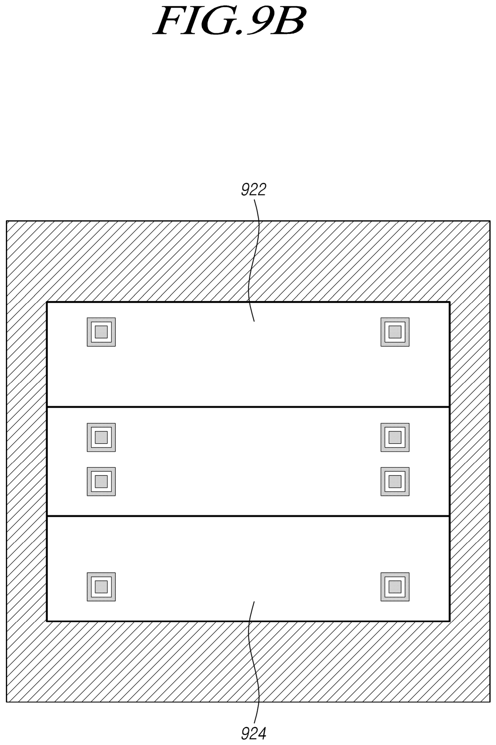

FIG. 9A is a diagram illustrating an example of projecting a first corrected image according to an embodiment. FIG. 9B is a diagram illustrating an example of projecting a first corrected image according to an embodiment. Referring to FIG. 9A, a first corrected image 910 having a corrected size and angle may be projected onto a screen. Further, referring to FIG. 9B, even in the edge blending situation, it may be identified that the image 922 and the image 924 are well arranged without a cutoff 724 of the markers and an overlap 723 of the markers that have previously occurred by projecting the first corrected image rather than projecting the reference image as it is. As described above, the recognition rate of the marker may be increased by projecting the first corrected image generated by performing the keystone correction on the reference image based on the previously performed keystone correction without projecting the reference image as it is.

According to an embodiment, referring back to FIG. 8, in operation 820, the image projection device may receive the captured image from the user device. The captured image may include an image obtained by capturing the first corrected image projected through operation 810 by the user device. For example, the image 620 of FIG. 6B may correspond to the captured image.

In an embodiment, the captured image may include at least four second markers.

In an embodiment, the second markers may be disposed at positions corresponding to the positions of the first markers.

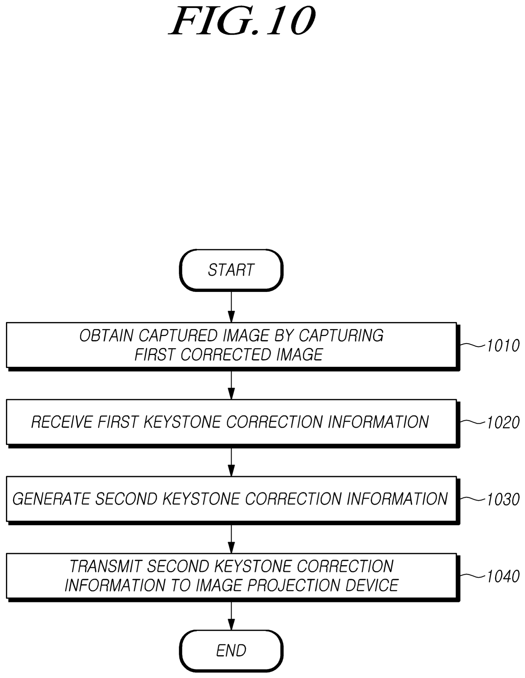

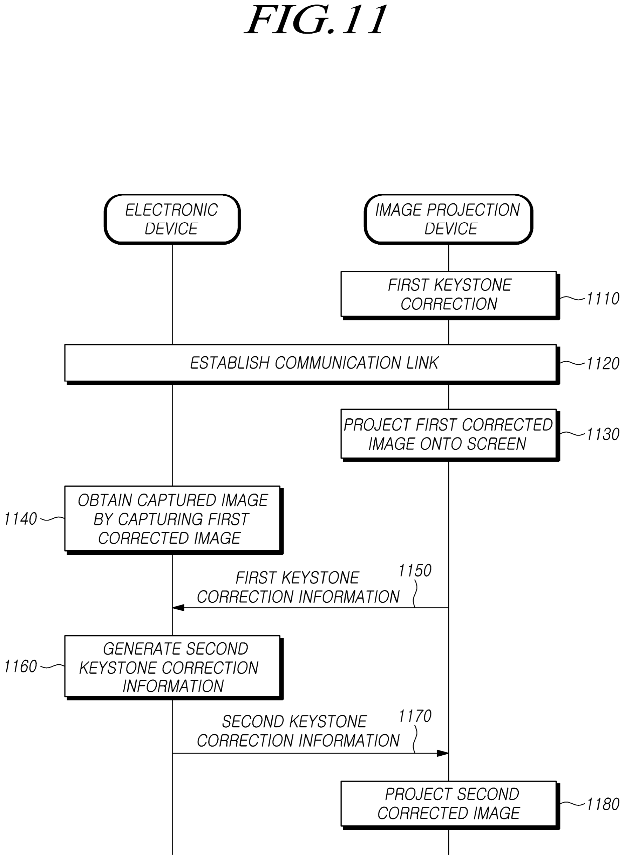

In an embodiment, the image projection device may receive the captured image according to operation 820 and generate the second keystone correction information based thereon, but the second keystone correction information may be generated by the user device. To that end, although not shown, the image projection device may transmit the first keystone correction information to the user device. The user device may generate the second keystone correction information based on the first keystone correction information received from the image projection device. An embodiment in which the user device generates the second keystone correction information is described in greater detail below with reference to FIG. 10 and FIG. 11.

According to an embodiment, in operation 830, the image projection device may generate second keystone correction information. The second keystone correction information is information used by the image projection device to perform the second keystone correction, and may include information for correcting the reference image to correspond to the direction in which the user device faces.

In an embodiment, the image projection device may identify a homography matrix between the first corrected image and the captured image, based on coordinate values of the at least four second markers and coordinate values of the at least four first markers. Further, the image projection device may identify the homography matrix between the first corrected image and the reference image, based on the first keystone information. The image projection device may identify the homography matrix between the reference image and the captured image, based on the homography matrix between the first corrected image and the captured image and the homography matrix between the first corrected image and the reference image.

In an embodiment, the image projection device may generate the second keystone correction information based on the information about the positions of the at least four first markers, the information about the positions of the at least four second markers included in the captured image, and the first keystone correction information.

In an embodiment, the information about the positions of the at least four first markers may include coordinate values of the at least four first markers. The information about the positions of the at least four second markers may include coordinate values of the at least four second markers.

In an embodiment, the second keystone correction information may include information about the homography matrix between the reference image and the captured image identified based on coordinate values of at least four first markers and coordinate values of at least four second markers.

In an embodiment, the entire projection area (e.g., 712) may be identified based on the first keystone correction information.

According to an embodiment, in operation 840, the image projection device may project the second corrected image onto the screen. The second corrected image may include an image obtained by correcting the reference image based on the second keystone correction information.

FIG. 10 is a flowchart illustrating an example operation of an electronic device according to an embodiment. The electronic device of FIG. 10 may refer to the electronic device 100 of FIG. 1 and the user device of FIG. 8. The image projection device of FIG. 10 may include a device corresponding to the image projection device 200 of FIG. 2 or the image projection device of FIG. 8. FIG. 8 illustrates an example in which second keystone correction information is generated by an image projection device, and FIG. 10 illustrates an example in which second keystone correction information is generated by a user device other than an image projection device. In the description of FIG. 10, descriptions overlapping those described with reference to FIGS. 1 to 9B may not be repeated.

According to an embodiment, in operation 1010, the electronic device may obtain a captured image by capturing a first corrected image.

In an embodiment, the first corrected image may include an image obtained by performing first keystone correction on a reference image by the image projection device.

In an embodiment, the image projection device may generate the first corrected image based on the reference image and the first keystone correction information.

In an embodiment, the first corrected image may include at least four first markers. The first marker may refer, for example, to a marker included in the first corrected image.

In an embodiment, the electronic device may obtain the captured image by capturing the first corrected image projected onto the screen through the camera. For example, the image 620 of FIG. 6B may correspond to the captured image.

In an embodiment, the captured image may include at least four second markers.

In an embodiment, the second markers may be disposed at positions corresponding to the positions of the first markers.

According to an embodiment, in operation 1020, the electronic device may receive the first keystone correction information from the image projection device.

According to an embodiment, the image projection device may obtain first keystone correction information by performing the first keystone correction on the reference image.

In an embodiment, the first keystone correction may be performed by default in response to the power-on of the image projection device. In other words, the first keystone correction may be performed before performing the operation sequence (e.g., establishing a communication link with the user device, transmitting keystone correction information to the user device, receiving the captured image or second keystone correction information from the user device, etc.) of embodiments to be described below, and the first keystone correction information obtained as a result of the first keystone correction may be stored in the memory of the image projection device.

In an embodiment, the electronic device may obtain information about the entire projection area through the first keystone correction information. In other words, the homography matrix of the electronic device and the image projection device may correct only the distortion due to the difference in angle between the electronic device and the image projection device, but may not correct the distortion due to the difference in angle and distance between the image projection device and the screen. The electronic device may receive the first keystone correction information from the image projection device to correct distortion due to a difference between the image projection device and the screen.

In an embodiment, the first keystone correction information may include information for generating a first corrected image based on the reference image.

In an embodiment, the electronic device may establish a communication link with the image projection device. The first keystone correction information may be received through the communication link established between the image projection device and the electronic device.

In an embodiment, the communication link between the image projection device and the electronic device may include both a wireless communication link (e.g., Bluetooth) and a wired communication link (e.g., wired connection).

According to an embodiment, in operation 1030, the electronic device may generate second keystone correction information.

In an embodiment, the electronic device may generate the second keystone correction information based on the information about the positions of the at least four first markers included in the reference image, the information about the positions of the at least four second markers included in the captured image, and the first keystone correction information.

In an embodiment, the second keystone correction information may include a homography matrix of the reference image and the captured image.

In an embodiment, the electronic device may identify coordinate values of at least four second markers by analyzing the captured image. Further, the electronic device may identify the coordinate values of the at least four first markers based on the information about the reference image.

In an embodiment, the electronic device may identify the homography matrix between the first corrected image and the captured image based on the coordinate values of the at least four second markers and the coordinate values of the at least four first markers.

In an embodiment, the electronic device may identify the homography matrix between the first corrected image and the reference image, based on the first keystone information.

In an embodiment, the electronic device may identify the homography matrix between the reference image and the captured image, based on the homography matrix between the first corrected image and the captured image and the homography matrix between the first corrected image and the reference image.

According to an embodiment, in operation 1040, the electronic device may transmit the second keystone correction information to the image projection device.

In an embodiment, the image projection device may correct the reference image based on the received second keystone correction information and project the same onto the screen.

In an embodiment, the electronic device may display a user interface for keystone correction in response to identifying an input, e.g., a user input, for performing keystone correction. In response to identifying a user input through the user interface, a signal for initiating keystone correction may be transmitted to the image projection device, and a user input for setting various conditions for keystone correction may be identified through the user interface.

FIG. 11 is a signal flow diagram illustrating an example operation of an electronic device and an image projection device, according to an embodiment. FIG. 11 illustrates a signaling flow when the electronic device generates second keystone correction information, as described with reference to FIG. 10.

According to an embodiment, in operation 1110, the image projection device may perform first keystone correction. The first keystone correction performed in operation 1110 is an operation performed irrespective of the connection with the electronic device, and may include keystone correction performed automatically in response to identifying that the image projection device is powered on or in response to identifying a user input. The first keystone correction may refer to keystone correction for correcting distortion due to a difference in angle and distance between the image projection device and the screen.

According to an embodiment, in operation 1120, the electronic device and the image projection device may establish a communication link. The communication link may include a wireless link or a wired link, and may be established in response to identification of a user input for establishing a communication link identified by the electronic device and the image projection device.

According to an embodiment, in operation 1130, the image projection device may project a first corrected image onto a screen. Operation 1130 may include operation 810 of FIG. 8.

According to an embodiment, in operation 1140, the electronic device may obtain the captured image by capturing the first corrected image. Operation 1140 may include operation 1010 of FIG. 10.

According to an embodiment, in operation 1150, the image projection device may transmit the first keystone correction information to the electronic device. Operation 1150 may include operation 1020 of FIG. 10.

According to an embodiment, in operation 1160, the electronic device may generate second keystone correction information. Operation 1160 may include operation 1030 of FIG. 10.

According to an embodiment, in operation 1170, the electronic device may transmit the second keystone correction information to the image projection device.

Operation 1170 may include operation 1040 of FIG. 10.

According to an embodiment, in operation 1180, the image projection device may project the second corrected image. Operation 1180 may include operation 840 of FIG. 8.

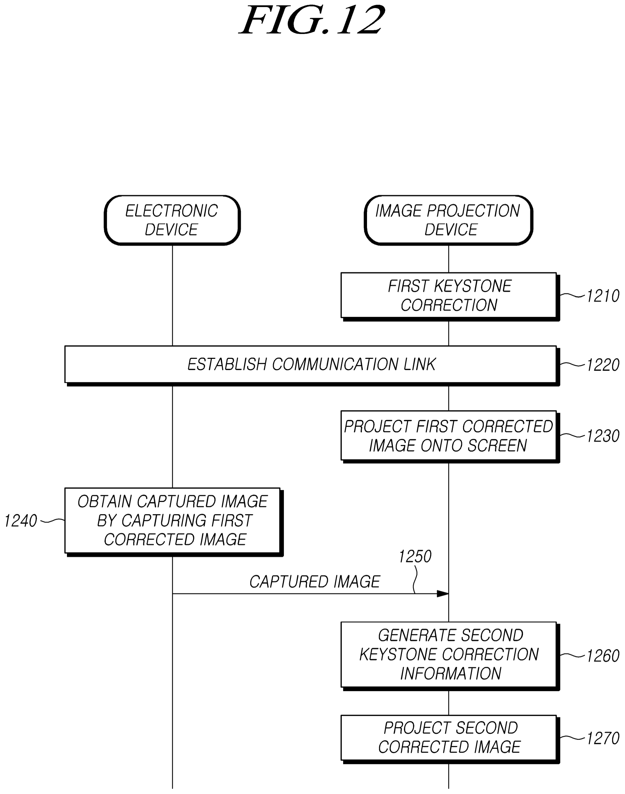

FIG. 12 is a signal flow diagram illustrating an example operation of an electronic device and an image projection device, according to various embodiments. FIG. 12 illustrates a signaling flow when an image projection device generates second keystone correction information, as described with reference to FIG. 8.

According to an embodiment, in operation 1210, the image projection device may perform first keystone correction. The first keystone correction performed in operation 1210 is an operation performed irrespective of the connection with the electronic device, and may include keystone correction performed automatically in response to identifying that the image projection device is powered on or in response to identifying a user input. The first keystone correction may refer to keystone correction for correcting distortion due to a difference in angle and distance between the image projection device and the screen.

According to an embodiment, in operation 1220, the electronic device and the image projection device may establish a communication link. The communication link may include a wireless link or a wired link, and may be established in response to identification of a user input for establishing a communication link identified by the electronic device and the image projection device.

According to an embodiment, in operation 1230, the image projection device may project a first corrected image onto a screen. Operation 1230 may include operation 810 of FIG. 8.

According to an embodiment, in operation 1240, the electronic device may obtain the captured image by capturing the first corrected image. Operation 1240 may include operation 1010 of FIG. 10.

According to an embodiment, in operation 1250, the electronic device may transmit the captured image to the image projection device. This may be intended for transmitting the captured image to the image projection device to allow the image projection device to generate the second keystone correction information.

According to an embodiment, in operation 1260, the image projection device may generate second keystone correction information. Operation 1260 may include operation 830 of FIG. 8.

According to an embodiment, in operation 1270, the image projection device may project the second corrected image. Operation 1270 may include operation 840 of FIG. 8.

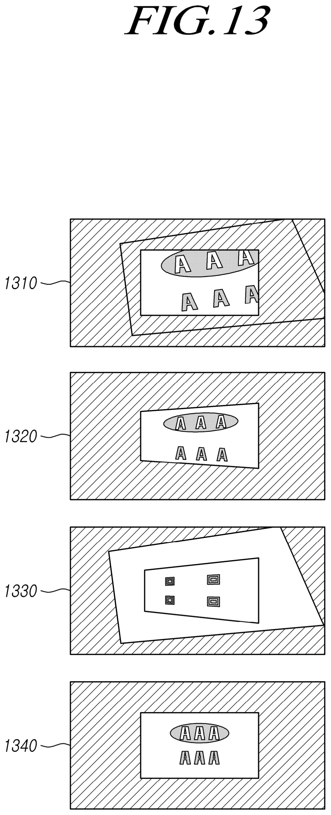

FIG. 13 is a diagram illustrating an example of a second keystone correction flow according to an embodiment.

FIG. 13 may include the content about the screen displayed on the screen when keystone correction is performed according to the content described with reference to FIGS. 1 to 12.

According to an embodiment, in a first step 1310, an image may be projected onto the screen through the image projection device.

According to an embodiment, in a second step 1320, the image projection device may automatically or manually correct and project the image so that the entire image may be displayed. In this case, that the image projection device automatically corrects the image may be referred to as first keystone correction. In the second step 1320, the image that has undergone the first keystone correction may be projected.

According to an embodiment, in a third step 1330, the image projection device may project the first corrected image. The first corrected image may include the image obtained by performing the first keystone correction on the reference image (including markers).

According to an embodiment, in a fourth step 1340, the image projection device may perform the second keystone correction described with reference to FIGS. 8 to 12. Accordingly, an image without distortion may be displayed on the screen.

An image projection device according to an example embodiment of the disclosure may comprise: memory storing information about a reference image, an image projection unit comprising a projector configured to project an image or a video, a communication unit, comprising communication circuitry, at least one processor, comprising processing circuitry, connected to the memory, the image projection unit, and the communication unit. In an example embodiment, at least one processor, individually and/or collectively, may be configured to control the image projection device to: project a first corrected image generated based on first keystone correction information and the reference image, onto a screen, receive, from a user device, a captured image obtained by capturing the first corrected image projected onto the screen, generate second keystone correction information based on information about positions of at least four first markers included in the reference image, information about positions of at least four second markers included in the captured image, and the first keystone correction information, and project a second corrected image generated based on the second keystone correction information and the reference image. The at least one second marker may be disposed at positions corresponding to the positions of the at least four first markers.

In an example embodiment, the information about the positions of the at least four first markers may include coordinate values of the at least four first markers, and the information about the positions of the at least four second markers may include coordinate values of the at least four second markers.

In an example embodiment, at least one processor, individually and/or collectively, may be configured to: establish a communication link with the user device through the communication unit, and receive the captured image from the user device through the communication unit.

In an example embodiment, at least one processor, individually and/or collectively, may be configured to: transmit the first keystone correction information to the user device through the communication link, and receive the second keystone correction information through the communication link.

In an example embodiment, at least one processor, individually and/or collectively, may be configured to: identify an input for projecting the first corrected image through a user interface for keystone correction, and project the first corrected image in response to identifying the input.

In an example embodiment, the image projection device may further comprise at least one sensor connected to at least one processor. At least one processor, individually and/or collectively, may be configured to: control the image projection device to project the reference image onto the screen, obtain the first keystone correction information from the reference image projected onto the screen using the at least one sensor. The at least one sensor may include at least one of a distance sensor and a rotation sensor.

In an example embodiment, the first keystone correction information may include information about a projection area of the reference image projected onto the screen.

In an example embodiment, the second keystone information may include information about a homography matrix of the image projection device and the user device.

An electronic device according to an example embodiment of the disclosure may comprise: memory storing information about a reference image, a camera, a communication unit comprising communication circuitry, and at least one processor, comprising processing circuitry, connected to the camera. In an example embodiment, at least one processor, individually and/or collectively, may be configured to control the electronic device to: obtain a captured image by capturing a first corrected image projected onto a screen by an image projection device using the camera, receive first keystone correction information from the image projection device through the communication unit, generate second keystone correction information based on information about positions of at least four first markers included in the reference image, information about positions of at least four second markers included in the captured image, and the first keystone correction information, and transmit the second keystone information to the image projection device. The first corrected image may include an image obtained by correcting the reference image based on the first keystone correction information. The at least one second marker may be disposed at positions corresponding to the positions of the at least four first markers.

In an example embodiment, the information about the positions of the at least four first markers may include coordinate values of the at least four first markers, and the information about the positions of the at least four second markers may include coordinate values of the at least four second markers.

In an example embodiment, at least one processor, individually and/or collectively, may be configured to: establish a communication link with the image projection device through the communication unit, and receive the first keystone correction information through the communication link, and transmit the second keystone correction information through the communication link.

In an example embodiment, at least one processor, individually and/or collectively, may be configured to: identify an input for capturing the first corrected image through a user interface for keystone correction, and obtain the captured image by capturing the first corrected image in response to identifying the input.

In an example embodiment, at least one processor, individually and/or collectively, may be configured to transmit the captured image to the image projection device through the communication unit in response to obtaining the captured image.

In an example embodiment, the first keystone correction information may include information about a projection area of the reference image projected onto the screen.

In an example embodiment, the second keystone information may include information about a homography matrix of the image projection device and the user device.

A method for operating an image projection device, according to an example embodiment of the disclosure, may comprise: projecting a first corrected image generated based on first keystone correction information and a reference image, onto a screen, receiving, from a user device, a captured image obtained by capturing the first corrected image projected onto the screen, generating second keystone correction information based on information about positions of at least four first markers included in the reference image, information about positions of at least four second markers included in the captured image, and the first keystone correction information, and projecting a second corrected image generated based on the second keystone correction information and the reference image. The at least one second marker may be disposed at positions corresponding to the positions of the at least four first markers.

In an example embodiment, the information about the positions of the at least four first markers may include coordinate values of the at least four first markers, and the information about the positions of the at least four second markers may include coordinate values of the at least four second markers.

In an example embodiment, the method for operating the image projection device may further comprise establishing a communication link with the user device, and receiving the captured image from the user device.

In an example embodiment, the method for operating the image projection device may further comprise transmitting the first keystone correction information to the user device through the communication link, and receiving the second keystone correction information through the communication link.

The electronic device according to various embodiments of the disclosure may be one of various types of electronic devices. The electronic devices may include, for example, a display device, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

As used herein, the term "part" or "module" may include a unit implemented in hardware, software, or firmware, or any combination thereof, and may interchangeably be used with other terms, for example, "logic," "logic block," "part," or "circuitry". A part or module may be a single integral component, or a minimum unit or part thereof, adapted to perform one or more functions. For example, according to an embodiment, 'part' or 'module' may be implemented in a form of an application-specific integrated circuit (ASIC).

As used in various embodiments of the disclosure, the term "if' may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the server device 200 described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in non-transitory computer-readable storage media. The computer-readable storage media may include, e.g., magnetic storage media (e.g., read-only memory (ROM), random-access memory (RAM), floppy disk, hard disk, etc.) and an optically readable media (e.g., CD-ROM or digital versatile disc (DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store™), directly between two UEs (e.g., smartphones), or online. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various example embodiments, it will be understood that the various example embodiments are intended to be illustrative, not limiting.

It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

**Claims**

1. An image projection device, comprising:

   memory storing information about a reference image;
   an image projection unit including a projector configured to project an image or a video;
   a communication unit comprising communication circuitry;
   at least one processor, comprising processing circuitry, connected to the memory, the image projection unit, and the communication unit, wherein at least one processor, individually and/or collectively, is configured to control the image projection device to:

   project a first corrected image generated based on first keystone correction information and the reference image, onto a screen;
   receive, from a user device, a captured image obtained by capturing the first corrected image projected onto the screen;
   generate second keystone correction information based on information about positions of at least four first markers included in the reference image, information about positions of at least four second markers included in the captured image, and the first keystone correction information; and
   project a second corrected image generated based on the second keystone correction information and the reference image, and
   wherein the at least four second marker is disposed at positions corresponding to the positions of the at least four first markers.

2. The image projection device of claim 1, wherein the information about the positions of the at least four first markers includes coordinate values of the at least four first markers, and wherein the information about the positions of the at least four second markers includes coordinate values of the at least four second markers.

3. The image projection device of any one of claim 1 or claim 2, wherein at least one processor, individually and/or collectively, is configured to control the image projection device to:

> establish a communication link with the user device through the communication unit; and
> receive the captured image from the user device through the communication unit.

4. The image projection device of claim 1, wherein at least one processor, individually and/or collectively, is configured to control the image projection device to:

> transmit the first keystone correction information to the user device through the communication unit; and
> receive the second keystone correction information through the communication unit.

5. The image projection device of any one of claims 1 to 4, wherein at least one processor, individually and/or collectively, is configured to control the image projection device to:

> identify an input for projecting the first corrected image through a user interface for keystone correction; and
> project the first corrected image in response to identifying the input.

6. The image projection device of any one of claims 1 to 5, further comprising at least one sensor connected to at least one processor, wherein at least one processor, individually and/or collectively, is configured to control the image projection device to:

> project the reference image onto the screen; and
> obtain the first keystone correction information from the reference image projected onto the screen using the at least one sensor,
> wherein the at least one sensor includes at least one of a distance sensor or a rotation sensor.

7. The image projection device of any one of claims 1 to 6, wherein the first keystone correction information includes information about a projection area of the reference image projected onto the screen.

8. The image projection device of any one of claims 1 to 7, wherein the second keystone information includes information about a homography matrix of the image projection device and the user device.

9. An electronic device, comprising:

> memory storing information about a reference image;
> a camera;
> a communication unit comprising communication circuitry; and
at least one processor, comprising processing circuitry, connected to the camera, wherein at least one processor, individually and/or collectively, is configured to:

> obtain a captured image by capturing a first corrected image projected onto a screen by an image projection device using the camera;
> receive first keystone correction information from the image projection device through the communication unit;
> generate second keystone correction information based on information about positions of at least four first markers included in the reference image, information about positions of at least four second markers included in the captured image, and the first keystone correction information; and
> transmit the second keystone information to the image projection device through the communication unit,
> wherein the first corrected image includes an image obtained by correcting the reference image based on the first keystone correction information, and
> wherein the at least four second marker is disposed at positions corresponding to the positions of the at least four first markers.

10. The electronic device of claim 9, wherein the information about the positions of the at least four first markers includes coordinate values of the at least four first markers, and
wherein the information about the positions of the at least four second markers includes coordinate values of the at least four second markers.

11. The electronic device of any one of claim 9 or claim 10, wherein at least one processor, individually and/or collectively, is configured to:

> establish a communication link with the image projection device through the communication unit; and
> receive the first keystone correction information through the communication link; and
> transmit the second keystone correction information through the communication link.

12. The electronic device of any one of claims 9 to 11, wherein at least one processor, individually and/or collectively, is configured to:

> identify an input for capturing the first corrected image through a user interface for keystone correction; and

obtain the captured image by capturing the first corrected image in response to identifying the input.

13. The electronic device of claim 9, wherein at least one processor, individually and/or collectively, is configured to transmit the captured image to the image projection device through the communication unit in response to obtaining the captured image.

14. The electronic device of any one of claims 9 to 13, wherein the first keystone correction information includes information about a projection area of the reference image projected onto the screen.

15. The electronic device of any one of claims 9 to 14, wherein the second keystone information includes information about a homography matrix of the image projection device and the user device.

# FIG.1

EP 4 746 403 A1

# FIG.2

<u>200</u>

210

220

PROCESSOR

MEMORY

INSTRUCTION ~221

IMAGE INPUT UNIT ~230

IMAGE PROJECTION UNIT ~240

COMMUNICATION UNIT ~250

SENSOR UNIT ~260

# *FIG.3*

# FIG.4

# FIG.5

# FIG.6A

# *FIG.6B*

# FIG.7A

# FIG.7B

# FIG.8

```
                    ┌─────────────┐
                    │    START    │
                    └──────┬──────┘
                           │
                           ▼
┌──────────────────────────────────────────────────┐
│      PROJECT FIRST CORRECTED IMAGE ONTO SCREEN     │──810
└──────────────────────────┬─────────────────────────┘
                           │
                           ▼
┌──────────────────────────────────────────────────┐
│       RECEIVE CAPTURED IMAGE FROM USER DEVICE      │──820
└──────────────────────────┬─────────────────────────┘
                           │
                           ▼
┌──────────────────────────────────────────────────┐
│   GENERATE SECOND KEYSTONE CORRECTION INFORMATION  │──830
└──────────────────────────┬─────────────────────────┘
                           │
                           ▼
┌──────────────────────────────────────────────────┐
│         PROJECT SECOND CORRECTED IMAGE             │──840
└──────────────────────────┬─────────────────────────┘
                           │
                           ▼
                    ┌─────────────┐
                    │     END     │
                    └─────────────┘
```

# FIG.9A

910

# FIG.9B

# FIG.10

```
START
  │
  ▼
┌──────────────────────────────────────────────┐
│   OBTAIN CAPTURED IMAGE BY CAPTURING          │ ～1010
│   FIRST CORRECTED IMAGE                       │
└──────────────────────────────────────────────┘
  │
  ▼
┌──────────────────────────────────────────────┐
│   RECEIVE FIRST KEYSTONE CORRECTION INFORMATION│ ～1020
└──────────────────────────────────────────────┘
  │
  ▼
┌──────────────────────────────────────────────┐
│  GENERATE SECOND KEYSTONE CORRECTION INFORMATION│ ～1030
└──────────────────────────────────────────────┘
  │
  ▼
┌──────────────────────────────────────────────┐
│   TRANSMIT SECOND KEYSTONE CORRECTION         │ ～1040
│   INFORMATION TO IMAGE PROJECTION DEVICE      │
└──────────────────────────────────────────────┘
  │
  ▼
END
```

# FIG.11

```
    ELECTRONIC                    IMAGE PROJECTION
      DEVICE                          DEVICE

                              ┌──────────────────────┐
                              │   FIRST KEYSTONE      │ ~1110
                              │     CORRECTION        │
                              └──────────────────────┘

┌────────────────────────────────────────────────────┐
│         ESTABLISH COMMUNICATION LINK                 │ ~1120
└────────────────────────────────────────────────────┘

                              ┌──────────────────────┐
                              │ PROJECT FIRST CORRECTED│ ~1130
                              │   IMAGE ONTO SCREEN    │
                              └──────────────────────┘

      ┌──────────────────────┐
1140~ │ OBTAIN CAPTURED IMAGE │
      │  BY CAPTURING FIRST   │
      │   CORRECTED IMAGE     │
      └──────────────────────┘

                        FIRST KEYSTONE      1150
                 CORRECTION INFORMATION
              ◄───────────────────────────

      ┌──────────────────────┐
1160~ │   GENERATE SECOND     │
      │ KEYSTONE CORRECTION   │
      │    INFORMATION        │
      └──────────────────────┘

                      SECOND KEYSTONE      1170
                 CORRECTION INFORMATION
              ───────────────────────────►

                              ┌──────────────────────┐
                              │   PROJECT SECOND      │ ~1180
                              │  CORRECTED IMAGE      │
                              └──────────────────────┘
```

# FIG.12

ELECTRONIC DEVICE

IMAGE PROJECTION DEVICE

FIRST KEYSTONE CORRECTION — 1210

ESTABLISH COMMUNICATION LINK — 1220

PROJECT FIRST CORRECTED IMAGE ONTO SCREEN — 1230

1240 — OBTAIN CAPTURED IMAGE BY CAPTURING FIRST CORRECTED IMAGE

CAPTURED IMAGE 1250

GENERATE SECOND KEYSTONE CORRECTION INFORMATION — 1260

PROJECT SECOND CORRECTED IMAGE — 1270

# FIG.13

## INTERNATIONAL SEARCH REPORT

| International application No. |
|---|
| **PCT/KR2024/014479** |

| A. | CLASSIFICATION OF SUBJECT MATTER |
|---|---|

**H04N 9/31**(2006.01)i; **H04N 21/4363**(2011.01)i; **H04N 21/41**(2011.01)i

According to International Patent Classification (IPC) or to both national classification and IPC

| B. | FIELDS SEARCHED |
|---|---|

Minimum documentation searched (classification system followed by classification symbols)

H04N 9/31(2006.01); G03B 21/00(2006.01); G03B 21/14(2006.01); G06K 7/14(2006.01); H04N 5/74(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 투사(projection), 기준(reference), 키스톤(keystone), 보정(correction), 스크린 (screen), 촬영(capture), 마커(marker)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0162595 A (SAMSUNG ELECTRONICS CO., LTD.) 08 December 2022 (2022-12-08)<br>See paragraphs [0044], [0060], [0068], [0078]-[0079], [0099] and [0131]-[0132]; claims 1-2 and 10; and figures 1a-4b and 11-12. | 1-15 |
| A | KR 10-2022-0166699 A (SAMSUNG ELECTRONICS CO., LTD.) 19 December 2022 (2022-12-19)<br>See paragraphs [0006]-[0027]; and claims 1-10. | 1-15 |
| A | JP 2015-023489 A (KDDI CORP.) 02 February 2015 (2015-02-02)<br>See paragraphs [0008]-[0027]; and claims 1-6. | 1-15 |
| A | JP 2013-192098 A (RICOH CO., LTD.) 26 September 2013 (2013-09-26)<br>See paragraphs [0005]-[0006]; and claims 1-6. | 1-15 |
| A | KR 10-2009-0090682 A (LG ELECTRONICS INC.) 26 August 2009 (2009-08-26)<br>See paragraphs [0015]-[0016]; and claims 1-7. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 January 2025** | **03 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 746 403 A1

**INTERNATIONAL SEARCH REPORT**
**Information on patent family members**

International application No.

**PCT/KR2024/014479**

| Patent document cited in search report | | | Publication date (day/month/year) | Patent family member(s) | | | Publication date (day/month/year) |
|---|---|---|---|---|---|---|---|
| KR | 10-2022-0162595 | A | 08 December 2022 | CN | 117413511 | A | 16 January 2024 |
| | | | | EP | 4283986 | A1 | 29 November 2023 |
| | | | | US | 2022-0385867 | A1 | 01 December 2022 |
| | | | | WO | 2022-255594 | A1 | 08 December 2022 |
| KR | 10-2022-0166699 | A | 19 December 2022 | EP | 4300951 | A1 | 03 January 2024 |
| | | | | US | 2024-0015272 | A1 | 11 January 2024 |
| | | | | WO | 2022-260273 | A1 | 15 December 2022 |
| JP | 2015-023489 | A | 02 February 2015 | None | | | |
| JP | 2013-192098 | A | 26 September 2013 | JP | 5970879 | B2 | 17 August 2016 |
| KR | 10-2009-0090682 | A | 26 August 2009 | None | | | |

Form PCT/ISA/210 (patent family annex) (July 2022)

39